# EUROPEAN PATENT APPLICATION

(11) **EP 2 594 224 A1**
(43) Date of publication of application: **22.05.2013**
(21) Application number: 11189167.7
(22) Date of filing: 15.11.2011
(51) Int. Cl.: A61C 8/00, A61C 13/00

(54) **Dental platform**

(71) Applicant: A.B. Dental Devices Ltd., 79245 Nir Galim (IL); Aviram, Meir J., 75293 Rishon Lezion (IL)
(72) Inventor: Aviram, Meir J., 75293 Rishon Lezion (IL); Bar-Shalom, Eliezer, 79245 Nir Galim (IL)
(74) Representative: Virdee-Crofts, Kulwinder Kaur

(57) **Abstract**

A platform having a flexible mesh that encloses the implantation location and is connected to the bone by small "micro-implants" that may be implanted in different directions. Moreover, due to its flexibility, the form of the mesh may be adapted to the bone during implantation. The mesh may hold growth factors that promote bone growth and stabilization of the platform, making the platform an integral part of the jawbone (osteointegration). For example, a gelatinous material (patty) with growth factors may be placed between the bone and the mesh, and the mesh is tightened upon the material, so that it fills its cavities. The mesh is produced by laser sintering. Meshes and micro-implants may come in different sizes (widths, lengths) to fit different situations. Micro-implants compact the supporting bone upon entry and spare bone removal that is usually associated with implant placement.

## Description

### BACKGROUND

### 1. TECHNICAL FIELD

The present invention relates to the field of dentistry, and more particularly, to a dental platform that replaces a dental implant in areas with a thin bone layer.

### 2. DISCUSSION OF RELATED ART

Due to their size, dental implants cannot be used in locations having a thin bone layer. Such locations may be locations in which bone material has been absorbed or eroded to leave but a few millimeters of bone above a nerve channel (e.g. in the mandible), frontal locations with thin bone, and maxillary locations with close sinuses. An attempt at a solution is presented e.g. by WIPO Publication No. 2008107356 disclosing specialized disc implants, which however damage the bone significantly, and U.S. Patent No. 5052930 which discloses a lateral connection, likewise however causing much bone damage in the process.

### BRIEF SUMMARY

One aspect of the present invention provides a kit for implantation in a jaw bone comprising: (i) a dental platform comprising an upper portion having a socket for connecting an abutment thereto, and two lateral flaps made of a flexible mesh having a plurality of stabilization spikes and a plurality of openings arranged to receive corresponding anchoring elements, wherein the flexible mesh is produced by laser sintering and is arranged to support and facilitate bone growth, (ii) micro-implants as anchoring elements, each comprising an osteo-integrating external thread for connecting the anchoring element to the jaw bone, a thread-less collar arranged to fit through the opening in the mesh, a socket arranged to allow screwing the anchoring element into the bone, and a curb arranged to affix the mesh to the anchoring element upon the screwing of the micro-implants into the bone; and (iii) a gelatinous material with growth factors arranged to be placed between the bone and the mesh, and fill mesh cavities upon tightening the mesh thereupon.

### BRIEF DESCRIPTION OF THE DRAWINGS

For a better understanding of embodiments of the invention and to show how the same may be carried into effect, reference will now be made, purely by way of example, to the accompanying drawings in which like numerals designate corresponding elements or sections throughout.

In the accompanying drawings:
**Figure 1** is a high level schematic illustration of a dental platform according to some embodiments of the invention,
**Figures 2A-2C** are high level schematic illustrations of situations with a thin bone layer and corresponding dental platforms, according to some embodiments of the invention,
**Figure 3** is a high level schematic illustration of placing a dental platform according to some embodiments of the invention,
**Figure 4** is a schematic illustration of the dental kit according to some embodiments of the invention, and
**Figure 5** is a high level schematic flowchart of an implantation method, according to some embodiments of the invention.

The drawings together with the following detailed description make apparent to those skilled in the art how the invention may be embodied in practice.

### DETAILED DESCRIPTION

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

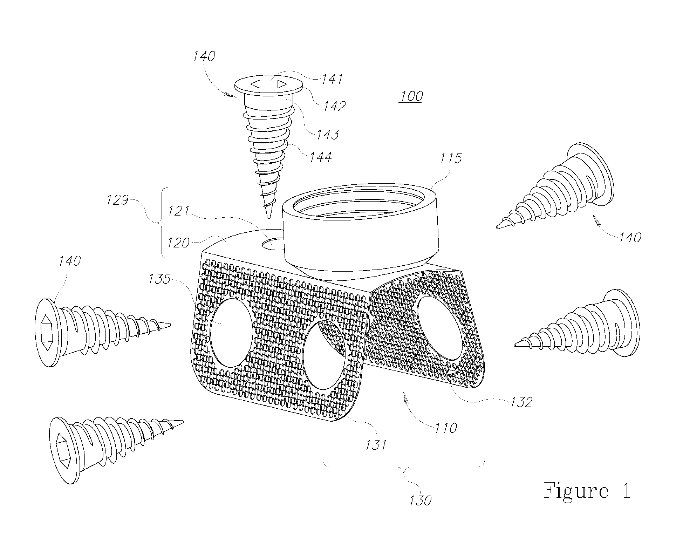

**Figure 1** is a high level schematic illustration of a dental implant platform **110** and components of a dental kit **100** for dental platform **110**, according to some embodiments of the invention.

Dental platform **110** comprises an upper portion **129** having a socket **115** for connecting an abutment (not shown) thereto, and two lateral flaps **130** made of a flexible mesh **131** having a plurality of stabilization spikes **132** and a plurality of openings **135** arranged to receive corresponding micro-implant anchoring elements **140**. Flexible mesh **131** is produced by laser sintering and is arranged to support bone growth.

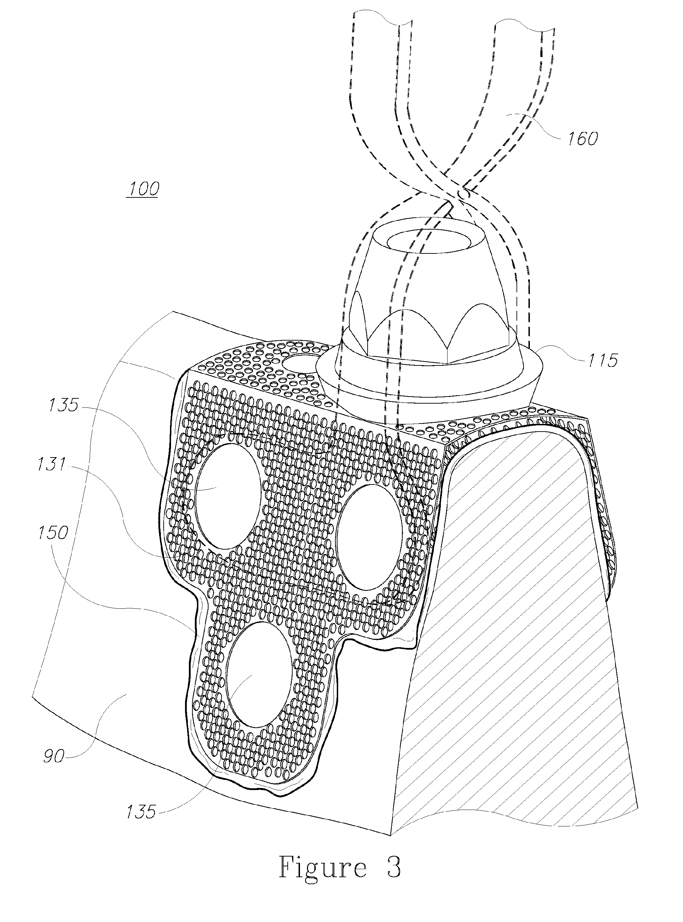

Upper portion **129** may further comprise an upper plate **120** with an upper opening **121** arranged to receive a corresponding anchoring element **140**. Upper plate **120** may be solid or perforated, and may be produced similarly and continuously to flexible mesh **131** (see **Figure 3**).

Platform **110** comprises flexible mesh **131** that encloses the implantation location and is connected to the bone by small "micro-implants" as anchoring elements **140**, which may be implanted in different directions. Moreover, due to its flexibility, the form of mesh **131** may be adapted to the bone during implantation. Mesh **131** may hold growth factors that promote bone growth and stabilization of platform **110** (osteointegration). For example, a gelatinous material **150** (patty, see **Figure 3**) with growth factors may be placed between the bone and mesh **131**, and mesh **131** is tightened upon the material, so that it fills its cavities. Mesh **131** may be produced by laser sintering to generate the small mesh cavities and the rough surface that promote osteointegration. Meshes **131** and micro-implants **140** may come in different sizes (widths, lengths) to fit different situations.

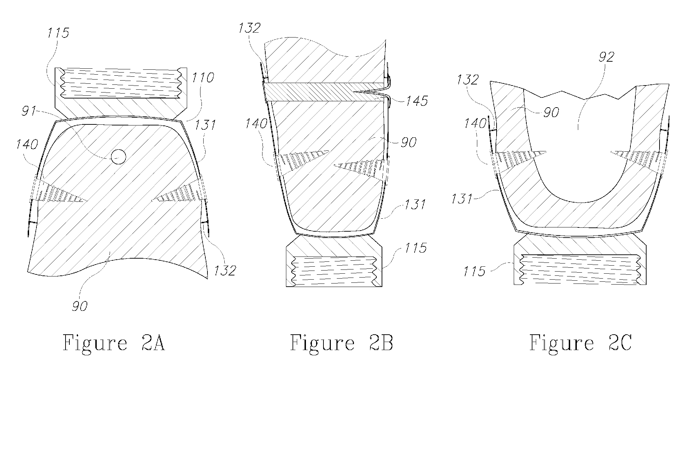

Openings **135** may be arranged in two columns along each lateral flap **130**, and/or in at least two rows along each lateral flap **130**, depending on the intended implantation region, exemplified in **Figures 2A-2C**. For example, **Figure 1** illustrates an arrangement with one row and two columns, **Figure 2B** illustrates and arrangement with two lines and one column, **Figure 3** illustrates openings **135** arranged in a triangle, and generally various configurations of flaps **131** and opening **135** may be generated to fit to various widths and heights of available bone, in various dental situations. Dental implant platforms **110** in different configurations may be supplied within kit **100** to provide the dentist with a full set of solutions for various dental situations.

**Figures 2A-2C** are high level schematic illustrations of situations with a thin bone layer and corresponding dental platforms, according to some embodiments of the invention, and illustrate schematically dental situations in which the proposed dental implant platform **110** and implantation method **200** are of special value. **Figure 2A** illustrates a situation of a thin bone layer **90** having a surface that is close to a nerve channel **91**, e.g. 1-2 mm from the mandibular nerve in the mandible. Should a regular implant be placed into the bone as the arrow indicates, the nerve may be severed and normal tactile sensation to the lower lip impaired.

**Figure 2B** illustrates a situation of a thin and narrow maxillary bone layer **90** (e.g. 2 mm wide) that does not provide enough support for a regular implant to be placed into the bone as the arrow indicates. **Figure 2C** illustrates a situation of a thin maxillary bone layer **90** over a sinus **92**. This situation does not support regular implants, and requires a preliminary sinus **92** lift surgery prior to implantation.

Dental implant **110** solves these implantation problems by changing the location of attachment of the bone. In the situation of **Figure 2A**, lateral connection of anchoring elements **140** avoid the risk of damaging the nerve. In the situation of **Figure 2B****,** flaps **130** enclose a larger portion of the maxilla and are supported by a large area of the bone. In this case, several rows of opening **135** may be used to utilize the longitudinal dimension of bone **90**. In some of these cases, a transverse connector **145 (****Figure 2B****)** may be arranged to go through jaw bone **90** from one of openings **135** in one flap **130** to an opposite opening **135** in the second flap **130**, and be secured at the opposite end, for example, connector **145** may have a splitting end that may be split to secure connector **145** upon flap **130**. The end may then be flattened (e.g. surplus material may be cut or otherwise removed) to minimize disturbance to the patient. Connector **145** hence may pass through the maxilla and provide a stable connection. In the situation of **Figure 2C**, a wide configuration of flaps, with two or more columns of openings **135** may be employed to ensure good contact to bone **90.**

**Figure 3** is a high level schematic illustration of placing a dental platform according to some embodiments of the invention.

Dental kit **100** may comprise osteo-integrating dental platform **110** as well as several anchoring elements **140** and a gelatinous material **150** with growth factors arranged to be placed between bone **90** and mesh **131**, and fill mesh cavities upon tightening mesh **131** upon bone **90**. Tightening mesh **131** upon bone **90** may be carried out by specialized pliers **160** that may be part of kit **100**.

Each anchoring element **140** is a micro implant, comprising an external osteo-integrating thread **144** for connecting as anchoring element **140** to jaw bone **90**, a thread-less collar **143** arranged to fit through opening **135** in mesh **131**, a socket **141** arranged to allow screwing anchoring element **140** into bone **90**, and a curb **142** arranged to affix mesh **131** to anchoring elements **140** upon the screwing of anchoring element **140** into bone **90**. Micro-implant thread **144** is especially treated to enhance osteo-integration, as in normal implants. Openings **135** and anchoring elements **140** are narrower than 2 mm in diameter. Anchoring element **140** as micro implants may be self-tapping, having no need for preliminary drilling as in regular implants. Self-tapping is characterized by a bone condensing effect, enhancing bone strength, instead of the regular bone loss that is associated with the necessary osteotomy due to regular implant placement.

Socket **115** may be configured in various shapes, according to the planned implantation. Two variants are depicted in **Figures 1** and **3**.

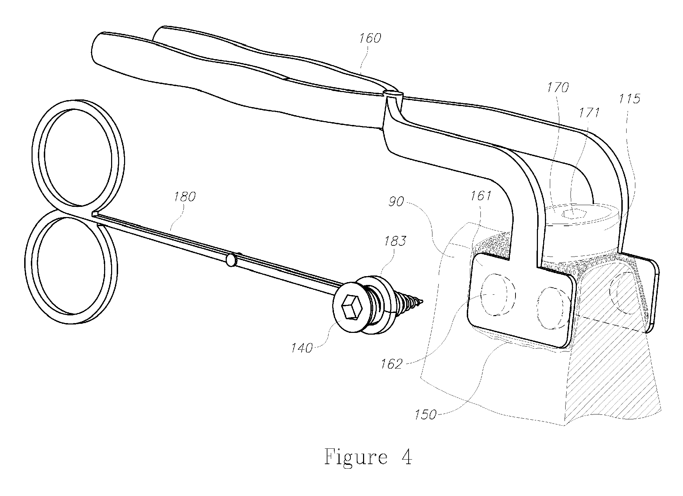

**Figure 4** is a schematic illustration of dental kit **100** according to some embodiments of the invention. Dental kit **100** may comprise dental platform **110**, gelatinous material **150** with growth factors, pliers **160** for pressing platform 110 upon bone **90**, anchoring elements **140**, a plug **170** and a guiding element **180** for placing anchoring element **140**.

Pliers **160** may be curved at their end to enhance its maneuverability. Pliers **160** may comprise a flattened end **161** arranged to fit upon flaps **130** and press mesh **131** onto bone **90**. Flattened end **161** may comprise protrusions **162** fitting into openings **135** to allow temporarily attaching platform **110** to end **161** during its approach to the bone, and further to allow exact and stable placing of platform **110** upon bone **90**. Protrusions **162** are structurally configured to release openings **135**, leaving platform **110** in place, upon releasing pliers **160**. Primary stability of flaps **130** is enhanced by spikes **132** connected to mesh **131**.

Micro-implant anchoring element **140** may be placed using a guiding tool **180** arranged to enable exact placing of anchoring elements **140**. Guiding tool **180** may comprise a guiding element **183** on its end, that is arranged to hold anchoring element **140** to allow free screwing of anchoring element **140** at least a part of its way through the bone. Guiding tool **180** prevents accidental change of axis or orientation of anchoring elements **140** during the operation of screwing them into the bone. Guiding element **183** may be as wide as opening **135** and hold anchoring element **140** on curb **142**, collar **143** or thread **144**. Guiding element **183** may be openable to allow removing it after placing or fastening of anchoring element **140**.

Kit **100** may further comprise a plug **170** fitting into socket **115** and arranged to protect socket **115** during bone and gum recovery. Plug **170** may be removed after a recovery stage to allow connecting an abutment to socket **115**, kept clean during the recovery by plug **170**. Plug **170** may comprise a socket **171** for placing and removing plug **170** from socket **115**.

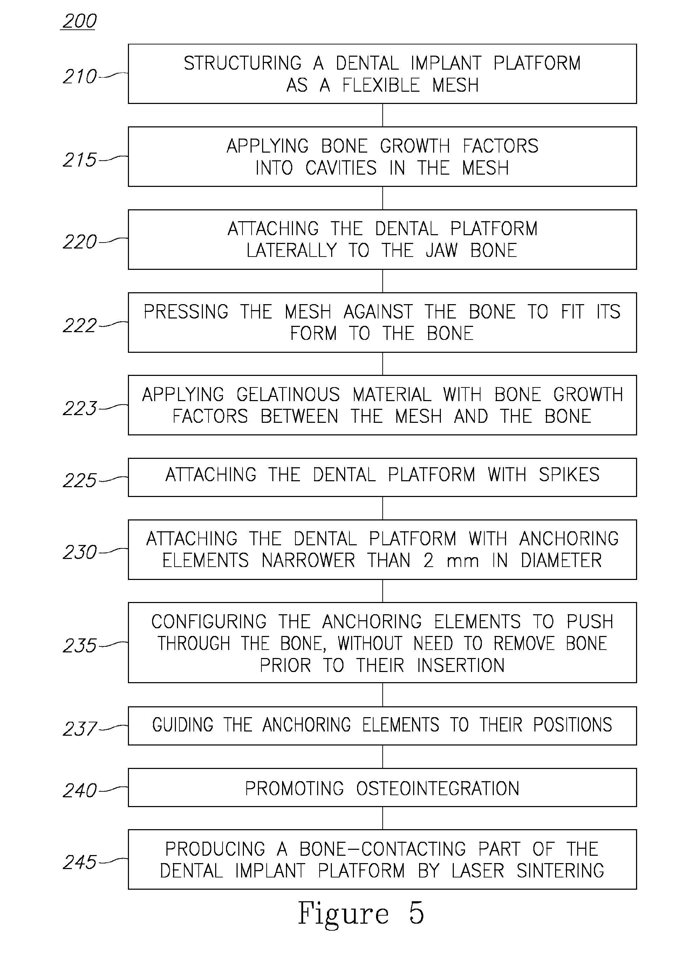

**Figure 5** is a high level schematic flowchart of an implantation method **200**, according to some embodiments of the invention.

Method **200** allows connecting an implant to a thin layer of jaw bone, by the following stages: promoting osteointegration (stage **240**) by producing at least a bone-contacting part of a dental platform by laser sintering (stage **245**) as a flexible mesh (stage **210**), and applying bone growth factors into cavities in the mesh (stage **215**), and attaching the dental platform laterally, beneath the thin layer of bone, to the jaw bone (stage **220**), using spikes (stage **225**) and anchoring elements narrower than 2 mm in diameter (stage **230**). Structuring the dental implant platform as a flexible mesh (stage **210**) provides the following advantages: increase in the surface area for potential bone growth, support for bone growth factors, the flexibility of the mesh allows fitting the platform to the gum tightly but without application of too large forces on the thin layer of bone, and flexibility in defining the attachment points by deforming the mesh.

Method **200** further comprises, during the application of the dental implant platform, pressing the mesh against the bone to fit its form to the bone (stage **222**) and applying gelatinous material with bone growth factors between the mesh and the bone (stage **223**). Furthermore, method **200** comprises configuring the anchoring elements to push through the bone, without need to remove bone prior to their insertion (stage **235**), and if necessary, guiding the anchoring elements to their positions (stage **237**).

According to aspects of the current invention, method **200** is a method of constructing an implant, comprising stages **210, 215, 225, 230, 235** and **245**, namely - producing at least a bone-contacting part of the implant by laser sintering (stage **245**) as a flexible mesh (stage **210**) with spikes (stage **225**), applying bone growth factors into cavities in the mesh (stage **215**), and providing anchoring elements narrower than 2 mm in diameter (stage **230**) that are configured to push through the bone (stage **235**) to connect the implant to the bone.

In comparison to prior art documents, the disclosed invention has the following decisive advantages. In contrast to laterally inserted disc implants, which likewise provide a surface contact between the implant and the bone, the disclosed invention does not require the removal of bone portions and keeps the existing bone substantially intact. This advantage is crucial in cases of little bone mass. The disclosed invention applies an opposite principle, that of minimal damage to the bone. In contrast to other documents, such as US5052930, which provide surface contact between the bone and the implant, the disclosed invention ensures a much closer contact of the implant to the bone, due to the flexible mesh, and does not require inflicting bone damage - neither during the fitting of the implant to the form of the existing bone, nor during the connection of the implant to the bone.

In contrast to any known implant, the hereby suggested system helps in building additional bone mass. While common implants require bone removal (drilling) prior to implantation, the micro implant anchoring elements only push through the bone, compacting it in the process, and do not require prior drilling. This feature, together with the application of bone growth factors in combination with the flexible mesh structure, provide maximal bone growth, exactly in the dental situations in which such growth is mostly desired.

In the above description, an embodiment is an example or implementation of the invention. The various appearances of "one embodiment", "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Furthermore, it is to be understood that the invention can be carried out or practiced in various ways and that the invention can be implemented in embodiments other than the ones outlined in the description above.

The invention is not limited to those diagrams or to the corresponding descriptions. For example, flow need not move through each illustrated box or state, or in exactly the same order as illustrated and described.

Meanings of technical and scientific terms used herein are to be commonly understood as by one of ordinary skill in the art to which the invention belongs, unless otherwise defined.

While the invention has been described with respect to a limited number of embodiments, these should not be construed as limitations on the scope of the invention, but rather as exemplifications of some of the preferred embodiments. Other possible variations, modifications, and applications are also within the scope of the invention.

## Claims

1. A dental platform (110) comprising:
an upper portion (129) having a socket (115) for connecting an abutment thereto,
and
two lateral flaps (130) made of a flexible mesh (131) having a plurality of stabilization spikes (132) and a plurality of openings (135) arranged to receive corresponding anchoring elements (140),
wherein the flexible mesh (131) is produced by laser sintering and is arranged to support and facilitate bone growth.

2. The dental platform (110) of claim 1, wherein the upper portion (129) further comprises an upper opening (121) arranged to receive a corresponding anchoring element (140).

3. The dental platform (110) of claim 1, wherein the openings (135) are arranged in two columns along each lateral flap (130).

4. The dental platform (110) of claim 1, wherein the openings (135) are arranged in at least two rows along each lateral flap (130).

5. The dental platform (110) of claim 1, wherein the openings (130) are narrower than 2 mm in diameter.

6. A dental kit (100) comprising:
the dental platform (110) of claim 1,
a plurality of anchoring elements (140), each comprising:
an external thread (144) for connecting the anchoring element (140) to a jaw bone (90),
a thread-less collar (143) arranged to fit through the opening (135) in the mesh (131),
a socket (141) arranged to allow screwing the anchoring element (140) into the bone (90), and
a curb (142) arranged to affix the mesh (131) to the anchoring element (140) upon the screwing of the anchoring element (140) into the bone (90),
wherein the anchoring elements (140) are configured to push through the jaw bone (90), without need to remove bone prior to their insertion; and
a gelatinous material (150) holding growth factors and arranged to be placed between the bone (90) and the mesh (131), and fill mesh cavities upon tightening the mesh (131) thereupon.

7. The kit (100) of claim 6, further comprising pliers (160) arranged to tighten the mesh (131) upon the jaw bone (90).

8. The kit (100) of claim 6, further comprising a connector (145) arranged to go through the jaw bone (90) from one of the openings (135) in the mesh (131) to an opposite opening (135) in the mesh (131), and be secured at the opposite end.

9. The kit (100) of claim 6, further comprising a plug (170) fitting into the socket (115) and arranged to protect the socket (115) during bone and gum recovery.

10. The kit (100) of claim 6, further comprising a guiding element (180) arranged to enable exact placing of the anchoring elements (140).

11. The kit (100) of claim 6, wherein the openings (135) and the anchoring elements (140) are narrower than 2 mm in diameter.

12. A method of constructing an implant, comprising:
producing at least a bone-contacting part of the implant by laser sintering (stage 245) as a flexible mesh (stage 210) with spikes (stage 225),
applying bone growth factors into cavities in the mesh (stage 215) providing anchoring elements narrower than 2 mm in diameter (stage 230) that are configured to push through the bone (stage 235) to connect the implant to the bone.

## Amended claims

### Amended claims in accordance with Rule 137(2) EPC.

**1.** A dental platform (110) comprising:
an upper portion (129) having a distal socket (115) for connecting an abutment thereto, and
two lateral flaps (130) made of a flexible mesh (131) having a plurality of stabilization spikes (132) and a plurality of openings (135) larger than cavities of the mesh (131) and arranged to receive corresponding anchoring elements (140), the two lateral flaps (130) attached to two sides of the upper portion,
wherein the flexible mesh (131) is produced by laser sintering..

**2.** The dental platform (110) of claim 1, wherein the upper portion (129) further comprises an upper opening (121) arranged to receive a corresponding anchoring element (140).

**3.** The dental platform (110) of claim 1, wherein the openings (135) are arranged in two columns along each lateral flap (130).

**4.** The dental platform (110) of claim 1, wherein the openings (135) are arranged in at least two rows along each lateral flap (130).

**5.** The dental platform (110) of claim 1, wherein the upper portion (129) of the platform is not perforated.

**6.** A dental kit (100) comprising:
a dental platform (110) comprising:
an upper portion (129) having a distal socket (115) for connecting an abutment thereto, and
two lateral flaps (130) made of a flexible mesh (131), the flexible mesh (131) having a plurality of openings (135) larger than cavities of the mesh (131) and a plurality of stabilization spikes (132) attached thereto in an inward direction, the two lateral flaps (130) attached to two sides of the upper portion, wherein the flexible mesh (131) is produced by laser sintering and is malleable to fit a form of a gum, and
a plurality of anchoring elements (140) fitting into the openings (135), each anchoring element comprising:
an external thread (144) for connecting the anchoring element (140) to a jaw bone (90),
a thread-less collar (143) arranged to fit through the opening (135) in the mesh (131),
a socket (141) arranged to allow screwing the anchoring element (140) into the bone (90), and
a curb (142) arranged to affix the mesh (131) to the anchoring element (140) upon the screwing of the anchoring element (140) into the bone (90),
wherein the openings (135) are smaller than 2 mm in diameter and the anchoring elements (140) are self-tapping and smaller than 2 mm in diameter;
a gelatinous material (150) holding growth factors and arranged to be placed between the bone (90) and the mesh (131), and fill mesh cavities upon tightening the mesh (131) thereupon; and
pliers (160) comprising a flattened end (stage 161) arranged to fit upon the lateral flaps (stage 130) and press the flexible mesh (stage 131) onto the bone (90).

**7.** The kit (100) of claim 6, wherein the upper portion (129) of the platform is not perforated.

**8.** The kit (100) of claim 6, further comprising a connector (145) arranged to go through the jaw bone (90) from one of the openings (135) in the mesh (131) to an opposite opening (135) in the mesh (131), and be secured at the opposite end.

**9.** The kit (100) of claim 6, further comprising a plug (170) fitting into the socket (115) and arranged to protect the socket (115) during bone and gum recovery.

**10.** The kit (100) of claim 6, further comprising a guiding element (180) arranged to enable exact placing of the anchoring elements (140).

**11.** The kit (100) of claim 6, wherein the openings (135) and the anchoring elements (140) are narrower than 2 mm in diameter.

**12.** A method of constructing an implant platform, comprising:
producing at least a bone-contacting part of the implant by laser sintering (stage 245) to have two lateral flaps made of a flexible mesh (stage 210) with spikes (stage 225) and a plurality of openings larger than cavities of the mesh,
providing bone growth factors applicable into cavities in the mesh (stage 215)
providing self-tapping anchoring elements narrower than 2 mm in diameter (stage 230) fitting into the openings to connect the implant to the bone.
